# FASCICULE DE BREVET EUROPEEN

(11) **EP 3 595 920 B1**
(45) Date de publication et mention de la délivrance du brevet: **03.11.2021**
(21) Numéro de dépôt: 18717104.6
(22) Date de dépôt: 16.03.2018
(51) Int. Cl.: B60H 1/32, F28D 1/02, B60K 11/06, F01P 11/10, B60K 11/04

(54) **DISPOSITIF DE VENTILATION DESTINÉ À GÉNÉRER UN FLUX D'AIR À TRAVERS UN ÉCHANGEUR DE CHALEUR DE VÉHICULE AUTOMOBILE**
BELÜFTUNGSVORRICHTUNG ZUR ERZEUGUNG EINES LUFTSTROMS DURCH EINEN KRAFTFAHRZEUGWÄRMETAUSCHER
VENTILATION DEVICE INTENDED TO GENERATE A FLOW OF AIR THROUGH A MOTOR VEHICLE HEAT EXCHANGER

(30) Priorité: 17.03.2017 FR 1752242
(43) Date de publication de la demande: 22.01.2020
(73) Titulaire: Valeo Systemes Thermiques, 78322 Le Mesnil Saint-Denis (FR)
(72) Inventeur: AZZOUZ, Kamel, 78322 Le Mesnil Saint Denis Cedex (FR); LISSNER, Michael, 78322 Le Mesnil Saint Denis Cedex (FR); BOISSELLE, Patrick, 53022 Laval (FR)
(74) Mandataire: Valeo Systèmes Thermiques
(86) Numéro de dépôt international: PCT/FR2018/050649
(87) Numéro de publication internationale: WO 2018/167443

(56) Documents cités:
- EP-A1- 1 167 165
- EP-A1- 1 715 157
- WO-A1-2017/098765
- JP-A- 2015 001 155
- US-A- 3 203 476
- US-A- 3 859 817
- US-A- 4 516 406

## Description

La présente invention concerne le domaine des dispositifs de ventilation, et plus particulièrement le domaine des dispositifs de ventilation pour module de refroidissement d'un véhicule automobile.

Un module de refroidissement d'un véhicule automobile comporte classiquement un échangeur de chaleur et un dispositif de ventilation adapté à générer un flux d'air à travers l'échangeur de chaleur.

L'échangeur de chaleur comprend généralement des tubes, dits tubes caloporteurs, disposés en rangée et dans lesquels un fluide caloporteur circule, et des éléments d'échange de chaleur reliés à ces tubes, souvent désignés par le terme « ailettes ». Les ailettes permettent d'augmenter la surface d'échange entre les tubes et le flux d'air traversant l'échangeur de chaleur.

Le dispositif de ventilation augmente le flux d'air ambiant traversant l'échangeur de chaleur, ce qui permet d'augmenter l'échange de chaleur entre le fluide caloporteur et l'air ambiant.

Un tel dispositif de ventilation comprend le plus souvent un ventilateur à hélice, qui présente plusieurs inconvénients.

En premier lieu, l'ensemble formé par le ventilateur à hélice et son système de motorisation occupe un volume important.

De plus, la distribution de l'air ventilé par l'hélice, souvent placée au centre de la rangée de tubes caloporteurs, n'est pas homogène sur l'ensemble de la surface de l'échangeur de chaleur. En particulier, certaines régions de l'échangeur de chaleur, comme les extrémités des tubes caloporteurs et les coins de l'échangeur de chaleur, ne sont pas ou peu atteintes par le flux d'air ventilé par l'hélice.

Enfin, lorsque la mise en marche du dispositif de ventilation ne s'avère pas nécessaire, notamment lorsque le flux d'air ambiant créé par le mouvement du véhicule automobile suffit à refroidir le fluide caloporteur, les pales de l'hélice masquent en partie l'échangeur de chaleur. Ainsi, une partie de l'échangeur de chaleur n'est pas ou peu ventilé par le flux d'air ambiant dans ce cas, ce qui limite l'échange de chaleur entre l'échangeur de chaleur et le flux d'air ambiant.

Par ailleurs, il est connu du brevet allemand DE 10 2011 120 865 un véhicule automobile présentant un dispositif de ventilation et un échangeur de chaleur, le dispositif de ventilation étant adapté à générer un flux d'air à travers l'échangeur de chaleur. Le dispositif de ventilation est adapté à créer un flux d'air secondaire à partir d'un flux primaire émis depuis un ou plusieurs éléments annulaires, le flux d'air secondaire étant beaucoup plus fort que le flux d'air primaire. Selon ce brevet, le dispositif de ventilation fait partie d'une grille de refroidissement, disposée en face avant du véhicule automobile.

Dans un tel véhicule automobile, chaque élément annulaire est alimenté en flux d'air primaire par un unique ventilateur, disposé à l'extérieur de l'élément annulaire, via un conduit débouchant ponctuellement dans l'élément annulaire. Par conséquent, le flux d'air éjecté émis par l'élément annulaire n'est pas homogène sur le contour de l'élément annulaire. Au contraire, le flux d'air émis est d'autant plus important qu'il est proche du ventilateur. Il s'en suit la création d'un flux d'air secondaire traversant l'échangeur de chaleur qui est inhomogène également.

Enfin, il est connu de la demande DE 10 2015 205 415 un dispositif de ventilation destiné à générer un flux d'air à travers un échangeur de chaleur comprenant un cadre creux et au moins une entretoise creuse, divisant la surface délimitée par le cadre en cellules. Le cadre et la ou les entretoises sont en communication de fluide avec une turbomachine d'alimentation en un flux d'air. La turbomachine est disposée à l'extérieur du cadre. Le cadre et éventuellement la ou les entretoises sont en outre munis d'une ouverture d'éjection du flux d'air les parcourant.

Là encore, le dispositif de ventilation ne permet pas de générer un flux d'air homogène à travers l'échangeur de chaleur. Au contraire, le flux d'air émis par le dispositif est d'autant plus important qu'il est éjecté du dispositif de ventilation à proximité de la turbomachine.

Un dispositif de ventilation destiné à générer un flux d'air à travers un échangeur de chaleur de véhicule automobile est aussi connu du document JP 2015 1155 A.

L'invention vise à proposer un dispositif de ventilation ne présentant pas au moins certains des inconvénients susmentionnés.

À cet effet, l'invention propose un dispositif de ventilation destiné à générer un flux d'air à travers un échangeur de chaleur de véhicule automobile, le dispositif de ventilation comprenant :
- une pluralité de conduits,
- au moins un collecteur d'air comportant des orifices, chaque conduit débouchant par une de ses extrémités dans un orifice distinct du collecteur d'air, chaque conduit ayant au moins une ouverture de passage d'un flux d'air traversant ledit conduit, l'ouverture étant distincte des extrémités du conduit correspondant, l'ouverture étant située à l'extérieur du au moins un collecteur d'air, délimitée par une paire de lèvres de guidage faisant saillie à partir d'une paroi du conduit correspondant.

La pluralité de conduits de ventilation depuis lesquels de l'air est éjecté, permet avantageusement de remplacer l'hélice conventionnelle, sans en présenter les inconvénients évoqués ci-dessus.

En effet, à capacités d'échange de chaleur égales, le volume occupé par un dispositif de ventilation selon l'invention est moindre qu'un dispositif de ventilation à hélice classique. Par ailleurs, toujours à capacités d'échange de chaleur égales, le débit d'air soufflé requis avec un dispositif de ventilation selon l'invention est moindre qu'avec un dispositif de ventilation à hélice classique.

En outre, la répartition de l'air ventilé par les tubes de ventilation est plus facile à contrôler. Notamment, la mise en œuvre d'un collecteur d'air permet d'alimenter tous les conduits avec sensiblement un même flux d'air. Ainsi, la répartition du flux d'air sur l'ensemble des conduits est rendue plus homogène, ce qui permet un refroidissement plus homogène de l'échangeur de chaleur.

Par ailleurs, l'invention permet de déporter des moyens de génération d'un flux d'air alimentant le ou les collecteurs d'air et donc les conduits, à distance des conduits et du dispositif d'échange de chaleur. Ceci offre davantage de libertés dans la conception du module de refroidissement incluant le dispositif de ventilation et l'échangeur de chaleur.

Selon des modes de réalisation préférés, le dispositif de ventilation selon l'invention peut comporter une ou plusieurs des caractéristiques suivantes, prises seules ou en combinaison :
- les conduits sont des tubes sensiblement rectilignes, parallèles entre eux et alignés de manière à former une rangée de tubes ;
- les lèvres de guidage sont sensiblement planes ;
- les lèvres de guidage sont sensiblement parallèles ;
- les lèvres de guidage s'étendent en partie à l'intérieur des conduits ;
- à chaque lèvre de guidage est associée une paroi d'obstruction reliant une extrémité de la lèvre, s'étendant à l'intérieur d'un conduit, à la face interne de la paroi du conduit ;
- les conduits ont une section transversale sensiblement circulaire ou oblongue interrompue par l'ouverture ;
- la au moins une ouverture d'un conduit est une fente dans le conduit, la au moins une fente s'étendant selon une direction d'allongement du conduit, de préférence sur au moins 90% de la longueur du conduit ;
- au moins un des conduits comprend des renforts, les renforts s'étendant entre deux ouvertures voisines, de préférence entre les lèvres de guidage, le cas échéant ;
- les renforts sont répartis régulièrement le long de chaque conduit ;
- chaque renfort d'un conduit s'étend sensiblement selon un plan normal à la direction d'allongement du conduit ;
- le dispositif de ventilation comporte deux collecteurs d'air, chaque collecteur d'air comportant des orifices, chaque conduit débouchant par une première extrémité dans un orifice d'un premier collecteur d'air et par une deuxième extrémité dans un orifice du deuxième collecteur d'air, chaque conduit débouchant dans des orifices distincts des premier et deuxième collecteurs d'air ;
- le dispositif de ventilation comporte au moins une turbomachine adaptée à générer un flux d'air, le ou chaque collecteur d'air étant en communication de fluide avec la au moins une turbomachine ou avec au moins une turbomachine respective, le ou chaque collecteur d'air distribuant dans les conduits, le flux d'air généré par la ou les turbomachines ;
- le dispositif de ventilation comprend au moins dix tubes de ventilation, de préférence au moins quinze tubes de ventilation, voire au moins vingt-quatre tubes de ventilation et/ou au plus cinquante tubes de ventilation, de préférence au plus trente-six tubes de ventilation, de préférence encore au plus trente tubes de ventilation ;
- le collecteur est dépourvu d'ouverture orientée en direction de l'échangeur de chaleur ;
- les tubes de ventilation ont une section transversale sensiblement oblongue, interrompue par les ouvertures ;
- la hauteur de la rangée de tubes de ventilation est comprise entre 400 et 550 mm ;
- la longueur de chaque tube de ventilation est comprise entre 400 et 700 mm ;
- la hauteur de chaque tube de ventilation est comprise entre 5 et 25 mm ;
- les tubes de ventilation peuvent être obtenus par pliage d'une feuille d'aluminium, par moulage, surmoulage, ou encore par impression en trois dimensions métallique ou plastique ; et
- des moyens de fixations à au moins une boite collectrice de l'échangeur de chaleur ou à une partie de structure du véhicule.

L'invention concerne également un module de refroidissement pour véhicule automobile comprenant un échangeur de chaleur, avec plusieurs conduits, dits conduits caloporteurs, dans lequel un fluide est destiné à circuler, et un dispositif de ventilation tel que décrit ci-avant, dans toutes ses combinaison, adapté à générer un flux d'air à travers l'échangeur de chaleur, le flux d'air généré entrant en contact avec au moins une partie des conduits caloporteurs.

Les conduits et le nombre de conduits du dispositif de ventilation peuvent être tels qu'une section de passage d'air minimale entre les conduits du dispositif de ventilation, définie dans un plan sensiblement perpendiculaire au flux d'air à travers l'échangeur de chaleur, est comprise entre 15% et 75% de la surface, de préférence entre 25 et 50%, définie dans un plan perpendiculaire au flux d'air à travers l'échangeur de chaleur, entre deux conduits caloporteurs extrémaux.

Le dispositif de ventilation peut être placé en amont par rapport à la direction du flux d'air à travers l'échangeur de chaleur ou, alternativement, en aval de l'échangeur de chaleur.

La longueur des tubes de ventilation peut être sensiblement égale à la longueur des tubes caloporteurs, et les tubes de ventilation peuvent être montés de sorte à être parallèles aux tubes caloporteurs.

La surface frontale des tubes de ventilation, mesurée dans un plan sensiblement perpendiculaire au flux d'air traversant l'échangeur de chaleur, peut être inférieure à 85% de la surface frontale occupée par les tubes caloporteurs.

La rangée de tubes de ventilation peut être à une distance de la rangée de tubes caloporteurs, inférieure à 100 mm et, de préférence, comprise entre 20 mm et 50 mm.

La hauteur de la rangée de tubes de ventilation (le terme hauteur étant ici la dimension correspondant à la direction selon laquelle les tubes de ventilation sont alignés) peut être notamment sensiblement égale ou inférieure à celle de la hauteur de la rangée de tubes caloporteurs.

L'invention sera mieux comprise à la lecture de la description qui va suivre donnée uniquement à titre d'exemple et en se référant aux dessins dans lesquels :
- la figure 1 est une vue en perspective d'un premier exemple de module de refroidissement pour véhicule automobile ;
- la figure 2 est une vue similaire à la figure 1 coupée selon le plan II-II ;
- la figure 3 est une vue en perspective de tubes de ventilation du dispositif de ventilation du module de refroidissement de la figure 1 ;
- la figure 4 est une section transversale d'un tube de ventilation du dispositif de ventilation du module de refroidissement pour véhicule automobile de la figure 1 ;
- les figures 5 et 6 sont des sections transversales de tubes de ventilation selon des deuxième et troisième exemples.

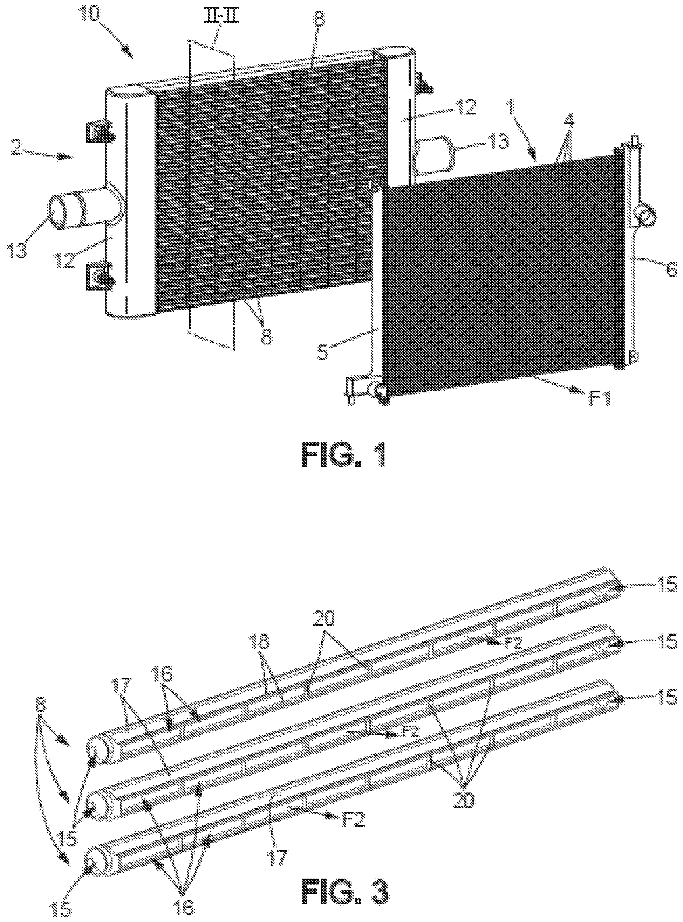

On a représenté à la figure 1 un premier exemple de module de refroidissement 10 pour véhicule automobile. Le module de refroidissement comporte un échangeur de chaleur 1 et un dispositif de ventilation 2. Le dispositif de ventilation est adapté à générer un flux d'air F1 à travers l'échangeur de chaleur 1. Pour ce faire, le dispositif de ventilation 2 est ici placé en amont par rapport à la direction du flux d'air F1 à travers l'échangeur de chaleur 1, le dispositif de ventilation 2 étant un dispositif soufflant. Alternativement, cependant, le dispositif de ventilation 2 peut être disposé en aval de l'échangeur de chaleur 1, lorsque le dispositif de ventilation 2 est un dispositif aspirant. Dans la suite de la description, on se place dans le cas où le dispositif de ventilation est un dispositif soufflant.

L'échangeur de chaleur 1 comprend des conduits 4, dits caloporteurs, de circulation de fluide, par exemple de l'eau ou du liquide de refroidissement. En l'espèce, les conduits caloporteurs 4 sont des tubes, sensiblement rectilignes. Les tubes caloporteurs 4 s'étendent selon une direction longitudinale. Les tubes caloporteurs 4 sont sensiblement identiques. Notamment les tubes caloporteurs 4 ont tous la même longueur. Les tubes caloporteurs 4 sont parallèles entre eux. Les tubes caloporteurs 4 sont alignés de manière à former une rangée de tubes caloporteurs 4.

Plus particulièrement, chaque tube caloporteur 4 a, dans l'exemple représenté, une section sensiblement oblongue, et est délimité par des première 4a et seconde 4b parois, qui sont associées à, notamment en contact avec, des ailettes d'échange de chaleur, permettant d'accroitre la surface d'échange de chaleur du dispositif d'échange de chaleur 1 avec le flux d'air F1 le traversant. Pour des raisons de clarté des figures, les ailettes ne sont pas représentées sur celles-ci.

Chaque tube caloporteur 4 est raccordé à un collecteur d'admission de fluide 5, d'une part, et à un collecteur d'évacuation de fluide 6, d'autre part. Les deux collecteurs 5, 6 d'admission et d'évacuation de fluide, respectivement, sont disposés chacun à une extrémité respective des tubes caloporteurs 4.

Par ailleurs, le dispositif de ventilation 2 comprend une pluralité de conduits de ventilation 8. Dans l'exemple illustré, les conduits de ventilations 8 sont sensiblement rectilignes et forment des tubes de ventilation. Les tubes de ventilation 8 sont par exemple parallèles entre eux et, de préférence, alignés de manière à former une rangée de tubes de ventilation 8. Les tubes de ventilation 8 sont ici tous identiques. En particulier, les tubes de ventilation 8 ont, selon les exemples illustrés, tous la même longueur. La longueur des tubes de ventilation 8 est sensiblement égale à la longueur des tubes caloporteurs 4, c'est-à-dire généralement entre 400 et 700 mm.

Tels qu'illustrés, les tubes caloporteurs 4 et les tubes de ventilation 8 sont parallèles entre eux. Ainsi, la rangée de tubes de ventilation 8 et la rangée de tubes caloporteurs s'étendent dans deux plans respectifs qui sont parallèles. Le nombre de tubes de ventilation 8 peut être adapté au nombre de tubes caloporteurs 4. Par exemple, le dispositif de ventilation 2 peut comprendre au moins dix tubes de ventilation 8, de préférence au moins quinze tubes de ventilation 8, de préférence encore au moins vingt-quatre tubes de ventilation 8 et/ou au plus cinquante tubes de ventilation 8, de préférence au plus trente-six tubes de ventilation 8, de préférence encore au plus trente tubes de ventilation. L'échangeur de chaleur 1 peut par exemple comporter entre soixante et soixante-dix tubes caloporteurs 4.

Les tubes de ventilation 8 et le nombre de tubes de ventilation 8 peuvent être choisis de sorte qu'une section de passage d'air minimale entre les tubes de ventilation 8, définie dans un plan sensiblement perpendiculaire au flux d'air F1 à travers l'échangeur de chaleur 1, est comprise entre 15% et 75% de la surface, de préférence entre 25 et 50%, définie dans un plan perpendiculaire au flux d'air F1 à travers l'échangeur de chaleur 1, entre deux tubes caloporteurs 4 extrémaux de la rangée de tubes caloporteurs 4. Dans ces plages de section de passage d'air minimale entre les tubes de ventilation 8, la section de passage permet d'améliorer les performances de refroidissement de l'échangeur de chaleur par rapport à un ventilateur conventionnel, sans dégrader significativement l'aérodynamisme du véhicule (comme cela peut se produire avec les pertes de charge engendrées pour une section de passage supérieure à 75%). Les meilleurs résultats sont obtenus dans la plage 25 à 50%. Pour parvenir à ces plages de section de passage, le dispositif peut notamment comprendre entre 8 et 40 tubes de ventilation ayant respectivement une hauteur comprise entre 5 mm et 25 mm.

De préférence, la surface frontale des tubes de ventilation 8, mesurée dans un plan sensiblement perpendiculaire au flux d'air F1 traversant l'échangeur de chaleur 1, est inférieure à 85% de la surface frontale occupée par les tubes caloporteurs 4.

Par ailleurs, afin de limiter le volume occupé par le module de refroidissement 10 tout en obtenant des performances d'échange de chaleur satisfaisante, la rangée de tubes de ventilation 8 peut être à une distance de la rangée de tubes caloporteurs 4, inférieure à 100 mm et, de préférence, comprise entre 20 mm et 50 mm.

De même, toujours pour limiter le volume occupé par le module de refroidissement 10, la hauteur de la rangée de tubes de ventilation 8 (le terme hauteur étant ici la dimension correspondant à la direction selon laquelle les tubes de ventilation 8 sont alignés) est de préférence sensiblement égale ou inférieure à celle de la hauteur de la rangée de tubes caloporteurs 4. Par exemple, la hauteur de la rangée de tubes de ventilation 8 est sensiblement égale ou inférieure à la hauteur de la rangée de tubes caloporteurs 4, et peut être comprise entre 400 et 550 mm. La hauteur de la rangée de tubes caloporteurs 4 est par exemple égale à 431 mm.

Le dispositif de ventilation peut être fixé dans le véhicule par l'intermédiaire de moyens de fixation à au moins une boite collectrice de l'échangeur de chaleur ou à une partie de structure du véhicule telle que la traverse avant, un longeron ou le châssis. Les moyens de fixation peuvent être des clips, des vis ou de la colle.

Chaque tube de ventilation 8 a, selon l'exemple des figures 1 à 3, une pluralité d'ouvertures 16 de passage d'un flux d'air F2 traversant le tube 8. En outres, les tubes de ventilation 8 débouchent, au niveau de chacune de leurs deux extrémités 15 dans un premier ou un deuxième collecteur d'air 12. Les ouvertures 16 des tubes de ventilation 8 sont situées à l'extérieure des collecteurs d'air 12. Plus précisément, ici, les ouvertures 16 sont orientées sensiblement en direction de l'échangeur de chaleur 1, et plus précisément encore, sensiblement en direction des tubes caloporteurs 4, les fentes 16 étant par exemple disposées en vis-à-vis des tubes caloporteurs 4 ou des ailettes logées entre les tubes caloporteurs.

En l'espèce, le dispositif de ventilation 2 étant soufflant, les extrémités 15 des tubes de ventilation 8 débouchent par une entrée d'alimentation en un flux d'air F2, dans les premier et deuxième collecteurs d'air 12. Les collecteurs 12 forment dans ce cas des collecteurs 12 d'admission d'air.

Chaque tube de ventilation 8 débouche dans un orifice 14 distinct de chaque collecteur 12. Ainsi, chaque collecteur d'air 12 a autant d'orifices 14 qu'il ne reçoit de tubes de ventilation 8, un tube de ventilation 8 étant reçu dans chacun des orifices 14 du collecteur d'air 12. Ceci permet une distribution plus homogène du flux d'air traversant chaque collecteur d'air 12, dans les différents tubes de ventilation 8.

En l'espèce, chaque collecteur d'air 12 a une forme creuse, par exemple une forme sensiblement cylindrique, plus particulièrement encore sensiblement cylindrique d'axe rectiligne. Outre les orifices 14 dans lesquels débouchent les tubes de ventilation 8, par leurs extrémités 15, chaque collecteur d'air 12 présente encore une ou plusieurs bouches 13 destinées à être en communication de fluide avec une turbomachine (non représentée sur les figures) pour créer un flux d'air dans chaque collecteur 12. Chaque collecteur 12 permet alors de distribuer ce flux d'air dans les différents tubes de ventilation 8. Selon différentes variantes, chaque collecteur d'air 12 peut être en communication de fluide avec une ou plusieurs turbomachines propres (c'est-à-dire qui ne sont en communication de fluide qu'avec l'un des deux collecteurs d'air 12) ou, au contraire, les collecteurs d'air 12 peuvent être en communication de fluide avec une même turbomachine ou plusieurs, communes (c'est-à-dire que chaque turbomachine est en communication de fluide avec chacun des collecteurs 12).

Avantageusement, chaque collecteur d'air 12 est dépourvu de toute autre ouverture que les orifices 14 et la ou les bouches 13 susmentionnés. Notamment, le collecteur 12 est de préférence dépourvu d'ouverture orientée en direction de l'échangeur de chaleur 1, qui permettrait dans le cas présent d'éjecter une partie du flux d'air parcourant le collecteur d'air 12, directement en direction de l'échangeur de chaleur 1, sans parcourir au moins une portion d'un tube de ventilation 8. Ainsi, tout le flux d'air créé par la ou les turbomachines parcourant le ou les collecteurs d'air 12, est réparti entre sensiblement tous les tubes de ventilation 8. Ceci permet également une répartition plus homogène de ce flux d'air.

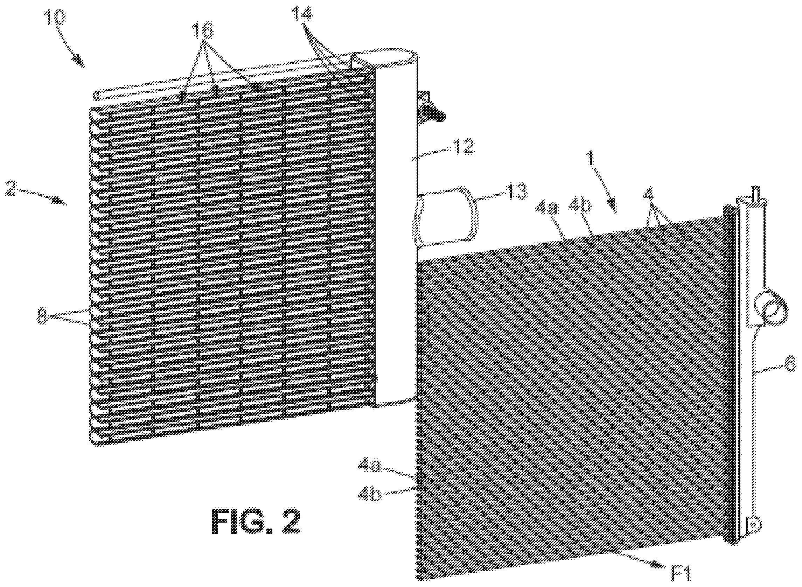

Il est à noter ici qu'un avantage du module de refroidissement 10 des figures 1 et 2 est de pouvoir déporter la ou les turbomachines à distance des tubes de ventilation 8, par l'intermédiaire notamment des collecteurs d'admission 12 et, éventuellement, d'un circuit aéraulique approprié mettant en communication de fluide la ou les bouches 13 du ou des collecteurs d'air 12 à une ou plusieurs turbomachines.

Par ailleurs, le ou les collecteurs d'air 12 et les tubes de ventilation 8 sont ici configurés de sorte qu'un flux d'air traversant le ou les collecteurs d'air 12 soit réparti entre les différents tubes de ventilation 8, parcoure les différents tubes de ventilation 8 et soit éjecté à travers les ouvertures 16. Ainsi, les ouvertures 16 étant disposées en regard de l'échangeur de chaleur 1, un flux d'air F2 est éjecté par les ouvertures 16, et traverse l'échangeur de chaleur 1.

Il est à noter toutefois que le flux d'air F1 traversant l'échangeur de chaleur 1 peut être sensiblement différent du flux d'air F2 éjecté par les ouvertures. Notamment, le flux d'air F1 peut comporter, en plus du flux d'air F2, un flux d'air ambiant créé par le mouvement du véhicule automobile en marche.

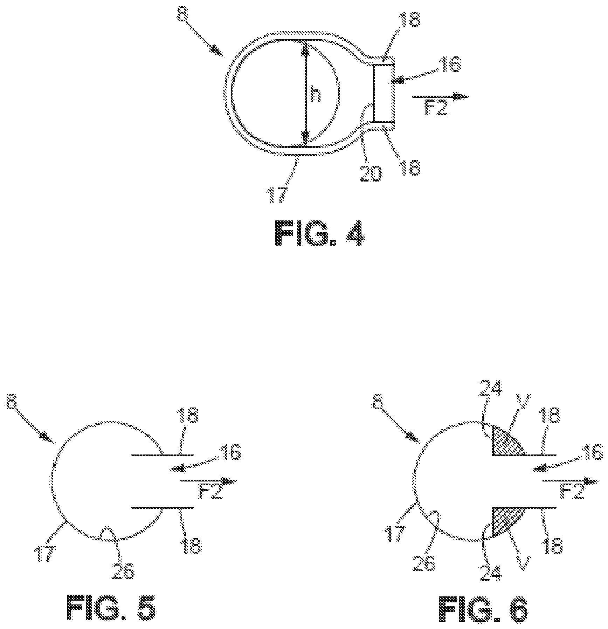

Dans le premier exemple illustré aux figures 1 à 4, et comme on le voit plus particulièrement à la figure 4, hormis à leurs extrémités 15 formant entrée d'admission d'air, qui ont une section transversale sensiblement circulaire, les tubes de ventilation 8 ont une section transversale sensiblement oblongue, interrompue par les ouvertures 16.

Le choix de cette forme permet une fabrication aisée des tubes de ventilation 8 et confère une bonne tenue mécanique aux tubes de ventilation 8. Notamment, de tels tubes de ventilation 8 peuvent être obtenus par pliage d'une feuille d'aluminium par exemple, mais aussi par moulage, surmoulage, ou encore par impression en trois dimensions métallique ou plastique.

Plus précisément, dans le premier exemple représenté aux figures 1 à 4, la section transversale des tubes de ventilation 8 a une forme sensiblement elliptique dont le petit axe correspond à la hauteur des tubes de ventilation 8 et le grand axe à la largeur des tubes de ventilation 8 (les termes hauteur et largeur devant s'entendre par rapport à l'orientation de la figure 4). Par exemple, le petit axe h de l'ellipse est d'environ 11 mm.

Pour augmenter le flux d'air F2 éjecté vers l'échangeur de chaleur 1 à travers les ouvertures 16, et comme on peut le voir sur la figure 3 en particulier, les ouvertures 16 sont constituées par des fentes pratiquées dans la paroi 17 du tube de ventilation 8, ces fentes 16 s'étendant selon la direction d'allongement du tube de ventilation 8. Cette forme en fente permet de constituer un passage d'air de grandes dimensions, tout en maintenant une tenue mécanique satisfaisante des tubes de ventilation 8. Ainsi, pour obtenir un passage d'air le plus grand possible, les ouvertures 16 s'étendent sur une grande partie de la longueur du tube de ventilation 8, de préférence sur une longueur totale correspondant à au moins 90% de la longueur du tube de ventilation 8.

Comme on peut le voir sur les figures 3 et 4, les ouvertures 16 sont délimitées par des lèvres de guidage 18 faisant saillie à partir de la paroi 17 du tube de ventilation 8.

Du fait qu'elles font saillie à partir de la paroi 17 de chaque tube de ventilation 8, les lèvres de guidage 18 permettent de guider l'air éjecté par l'ouverture 16 depuis l'intérieur du tube de ventilation 8 en direction de l'échangeur de chaleur 1.

Les lèvres de guidage 18 sont de préférence planes et sensiblement parallèles. Par exemple, elles sont espacées l'une de l'autre d'une distance d'environ 5 mm et ont une largeur (le terme largeur devant être considéré au vu de l'orientation de la figure 4), comprise entre 2 et 5 mm. Les lèvres de guidage 18 s'étendent avantageusement sur toute la longueur de chaque ouverture 16.

Les lèvres de guidage 18 sont de préférence venues de matière avec le tube de ventilation 8. Les lèvres de guidage 18 sont par exemple obtenues par pliage de la paroi 17 du tube de ventilation 8.

Par ailleurs, les ouvertures 16 sont également délimitées, dans le sens de la longueur des tubes de ventilation 8, par des éléments de renfort 20 des tubes de ventilation 8. Les éléments de renfort 20 permettent de maintenir constante la largeur des ouvertures 16. Ici, ceci est réalisé du fait que les éléments de renforts s'étendent entre les deux lèvres de guidage 18 s'étendant de part et d'autre de chaque ouverture 16. Les éléments de renforts 20 s'étendent de préférence dans un plan sensiblement normal à la direction d'allongement des tubes de ventilation 8, ceci afin de maintenir la plus grande possible, la section des ouvertures 16 permettant le passage du flux d'air F2. Les éléments de renforts 20 sont avantageusement répartis régulièrement sur la longueur des tubes de ventilation 8. Dans l'exemple illustré à la figure 3, chaque tube de ventilation 8 comporte sept éléments de renfort 20. Bien entendu, ce nombre n'est nullement limitatif.

Dans les deuxième et troisième exemples illustrés aux figures 5 et 6, la section transversale des tubes de ventilation 8 est sensiblement circulaire, interrompue par les ouvertures 16. Par exemple, le diamètre du cercle interrompu par les ouvertures 16 est d'environ 11 mm.

De plus, dans ces deuxième et troisième exemples, les lèvres de guidage 18 s'étendent en partie à l'intérieur des tubes de ventilation 8. De préférence, les lèvres de guidage 18 s'étendent à l'intérieur des tubes de ventilation 8 sur la moitié de leur largeur (le terme largeur devant être considéré au vu de l'orientation des figures 5 et 6). Par exemple, les lèvres de guidage 18 ayant une largeur de 4 mm, la partie s'étendant à l'intérieur du tube de ventilation 8 a une largeur de 2 mm.

Dans le troisième exemple illustré à la figure 6, chaque lèvre de guidage 18 est associée à une paroi d'obstruction 24, qui relie l'extrémité de la lèvre de guidage 18 s'étendant à l'intérieur des tubes de ventilation 18, à la face interne 26 de la paroi 17 du tube de ventilation. Cette paroi d'obstruction 24 permet ainsi de limiter le phénomène de recirculation de l'air dans l'espace compris entre la lèvre de guidage 18 et la face interne 26 de la paroi 17 du tube de ventilation 8.

Dans le mode de réalisation illustré à la figure 6, la paroi d'obstruction 24 est plane et s'étend à partir de la lèvre de guidage 18, vue en section transversale, perpendiculairement à la lèvre de guidage 18. Le volume V contenu entre la paroi d'obstruction 24 et la face interne 26 de la paroi 17 du tube de ventilation peut être comblé par de la mousse, un carter plastique ou métallique, ou encore au moyen de tout autre matériau, de préférence léger.

L'invention n'est pas limitée aux exemples présentés et d'autres modes de réalisation sont accessibles à l'homme du métier.

En particulier, toute combinaison des exemples décrits peut être envisagée.

On peut notamment envisager d'autres formes pour les sections transversales des tubes de ventilation 8, telles que des formes sensiblement rectangulaires.

Également, selon un mode de réalisation non représenté, le dispositif de ventilation peut comporter un unique collecteur d'air dans lequel débouchent les différents tubes de ventilation. Cependant, le mode de réalisation avec deux collecteurs d'air apparait préféré, car il semble permettre d'obtenir un flux d'air plus homogène à travers l'échange de chaleur.

Par ailleurs, les modes de réalisation représentés sur les figures illustrent un échangeur de chaleur de type échangeur pour le refroidissement d'un moteur de véhicule. Toutefois, le dispositif de ventilation peut générer un flux d'air à travers tout autre échangeur de chaleur de véhicule automobile, tels qu'un échangeur de chaleur haute température et/ou basse température, un condenseur, un échangeur pour le refroidissement d'air de suralimentation, etc. Le module de refroidissement peut de la même manière comporter n'importe quel échangeur de chaleur de ce type.

## Revendications

1. Dispositif de ventilation (2) destiné à générer un flux d'air (F1) à travers un échangeur de chaleur (1) de véhicule automobile, le dispositif de ventilation (2) comprenant :
- une pluralité de conduits (8),
- au moins un collecteur d'air (12) comportant des orifices (14), chaque conduit (8) débouchant par une de ses extrémités (15) dans un orifice (14) distinct du collecteur d'air (12),
chaque conduit (8) ayant au moins une ouverture (16) de passage d'un flux d'air (F2) traversant ledit conduit (8), l'ouverture (16) étant :
- distincte des extrémités (15) du conduit (8) correspondant,
- située à l'extérieur du au moins un collecteur d'air (12), et ledit dispositif de ventilation étant **caractérisé en ce que** l'ouverture (16) étant:
- délimitée par une paire de lèvres de guidage (18) faisant saillie à partir d'une paroi (17) du conduit (8) correspondant

2. Dispositif de ventilation (2) selon la revendication 1, dans lequel les conduits sont des tubes (8) sensiblement rectilignes, parallèles entre eux et alignés de manière à former une rangée de tubes (8).

3. Dispositif de ventilation (2) selon l'une quelconque des revendications précédentes, dans lequel les conduits (8) ont une section transversale sensiblement circulaire ou oblongue interrompue par l'ouverture (16).

4. Dispositif de ventilation (2) selon l'une quelconque des revendications précédentes, dans lequel la au moins une ouverture (16) d'un conduit (8) est une fente dans le conduit (8), la au moins une fente (16) s'étendant selon une direction d'allongement du conduit (8), de préférence sur au moins 90% de la longueur du conduit (8).

5. Dispositif de ventilation (2) selon l'une quelconque des revendications précédentes, dans lequel au moins un des conduits (8) comprend des renforts (20), les renforts (20) s'étendant entre deux ouvertures (16) voisines, de préférence entre les lèvres de guidage (18), le cas échéant.

6. Dispositif de ventilation (2) selon l'une quelconque des revendications précédentes, comportant deux collecteurs d'air (12), chaque collecteur d'air (12) comportant des orifices (14), chaque conduit (8) débouchant par une première extrémité (15) dans un orifice (14) d'un premier collecteur d'air (12) et par une deuxième extrémité (15) dans un orifice (14) du deuxième collecteur d'air (12), chaque conduit (8) débouchant dans des orifices (14) distincts des premier et deuxième collecteurs d'air (12).

7. Dispositif de ventilation (2) selon l'une quelconque des revendications précédentes, comportant au moins une turbomachine adaptée à générer un flux d'air, le ou chaque collecteur d'air (12) étant en communication de fluide avec la au moins une turbomachine ou avec au moins une turbomachine respective, le ou chaque collecteur d'air (12) distribuant dans les conduits (8), le flux d'air généré par la ou les turbomachines.

8. Module de refroidissement (10) pour véhicule automobile comprenant un échangeur de chaleur (1), avec plusieurs conduits, dits conduits caloporteurs (4), dans lequel un fluide est destiné à circuler, et un dispositif de ventilation (2) selon l'une quelconque des revendications précédentes, adapté à générer un flux d'air (F1) à travers l'échangeur de chaleur, le flux d'air généré entrant en contact avec au moins une partie des conduits caloporteurs (4).

9. Module de refroidissement (10) selon la revendication 8, dans lequel les conduits (8) et le nombre de conduits (8) du dispositif de ventilation (2) sont tels qu'une section de passage d'air minimale entre les conduits (8) du dispositif de ventilation (2), définie dans un plan sensiblement perpendiculaire au flux d'air (F1) à travers l'échangeur de chaleur (1), est comprise entre 15% et 75% de la surface, de préférence entre 25 et 50%, définie dans un plan perpendiculaire au flux d'air (F1) à travers l'échangeur de chaleur (1), entre deux conduits caloporteurs (4) extrémaux.

## Patentansprüche

1. Belüftungsvorrichtung (2), die dazu bestimmt ist, einen Luftstrom (F1) durch einen Wärmetauscher (1) eines Kraftfahrzeugs zu erzeugen, wobei die Belüftungsvorrichtung (2) enthält:
- eine Vielzahl von Kanälen (8),
- mindestens eine Öffnungen (14) aufweisende Luftsammelleitung (12), wobei jeder Kanal (8) über eines seiner Enden (15) in eine andere Öffnung (14) der Luftsammelleitung (12) mündet,
wobei jeder Kanal (8) mindestens eine Öffnungsfläche (16) für den Durchgang eines Luftstroms (F2) hat, der den Kanal (8) durchquert, wobei die Öffnungsfläche (16):
- sich von den Enden (15) des entsprechenden Kanals (8) unterscheidet,
- sich außerhalb der mindestens einen Luftsammelleitung (12) befindet, und
wobei die Belüftungsvorrichtung **dadurch gekennzeichnet ist, dass** die Öffnungsfläche (16):
- von einem Paar von Führungslippen (18) begrenzt wird, die ausgehend von einer Wand (17) des entsprechenden Kanals (8) vorstehen.

2. Belüftungsvorrichtung (2) nach Anspruch 1, wobei die Kanäle im Wesentlichen geradlinige Rohre (8) parallel zueinander und so ausgerichtet sind, dass sie eine Reihe von Rohren (8) bilden.

3. Belüftungsvorrichtung (2) nach einem der vorhergehenden Ansprüche, wobei die Kanäle (8) einen im Wesentlichen kreisförmigen oder länglichen Querschnitt haben, der von der Öffnungsfläche (16) unterbrochen wird.

4. Belüftungsvorrichtung (2) nach einem der vorhergehenden Ansprüche, wobei die mindestens eine Öffnungsfläche (16) eines Kanals (8) ein Schlitz in dem Kanal (8) ist, wobei der mindestens eine Schlitz (16) sich gemäß einer Längsrichtung des Kanals (8) vorzugsweise über mindestens 90% der Länge des Kanals (8) erstreckt.

5. Belüftungsvorrichtung (2) nach einem der vorhergehenden Ansprüche, wobei mindestens einer der Kanäle (8) Verstärkungen (20) enthält, wobei die Verstärkungen (20) sich zwischen zwei benachbarten Öffnungsflächen (16) erstrecken, vorzugsweise ggf. zwischen den Führungslippen (18).

6. Belüftungsvorrichtung (2) nach einem der vorhergehenden Ansprüche, die zwei Luftsammelleitungen (12) aufweist, wobei jede Luftsammelleitung (12) Öffnungen (14) aufweist, wobei jeder Kanal (8) über ein erstes Ende (15) in eine Öffnung (14) einer ersten Luftsammelleitung (12) und über ein zweites Ende (15) in eine Öffnung (14) der zweiten Luftsammelleitung (12) mündet, wobei jeder Kanal (8) in unterschiedliche Öffnungen (14) der ersten und der zweiten Luftsammelleitungen (12) mündet.

7. Belüftungsvorrichtung (2) nach einem der vorhergehenden Ansprüche, die mindestens eine Turbomaschine aufweist, die geeignet ist, einen Luftstrom zu erzeugen, wobei die oder jede Luftsammelleitung (12) mit der mindestens einen Turbomaschine oder mit mindestens einer jeweiligen Turbomaschine in Fluidverbindung steht, wobei die oder jede Luftsammelleitung (12) den von der oder den Turbomaschinen erzeugten Luftstrom in die Kanäle (8) verteilt.

8. Kühlmodul (10) für ein Kraftfahrzeug, das einen Wärmetauscher (1) mit mehreren Kanälen, Wärmeträgerkanäle (4) genannt, in denen ein Fluid zirkulieren soll, und eine Belüftungsvorrichtung (2) nach einem der vorhergehenden Ansprüche enthält, die geeignet ist, einen Luftstrom (F1) durch den Wärmetauscher zu erzeugen, wobei der erzeugte Luftstrom mit mindestens einem Teil der Wärmeträgerkanäle (4) in Kontakt kommt.

9. Kühlmodul (10) nach Anspruch 8, wobei die Kanäle (8) und die Anzahl von Kanälen (8) der Belüftungsvorrichtung (2) so sind, dass ein minimaler Luftdurchgangsquerschnitt zwischen den Kanälen (8) der Belüftungsvorrichtung (2), definiert in einer Ebene im Wesentlichen lotrecht zum Luftstrom (F1) durch den Wärmetauscher (1) hindurch, zwischen 15% und 75%, vorzugsweise zwischen 25 und 50% der Fläche liegt, die in einer Ebene lotrecht zum Luftstrom (F1) durch den Wärmetauscher (1) hindurch zwischen zwei End-Wärmeträgerkanälen (4) definiert ist.

## Claims

1. Ventilation device (2) intended to generate a flow of air (F1) through a heat exchanger (1) of a motor vehicle, the ventilation device (2) comprising:
- a plurality of ducts (8),
- at least one air manifold (12) comprising orifices (14), each duct (8) emerging by one of its ends (15) in a distinct orifice (14) of the air manifold (12),
each duct (8) having at least one aperture (16) for the passage of a flow of air (F2) passing through said duct (8), the aperture (16) being:
- distinct from the ends (15) of the corresponding duct (8),
- situated outside of the at least one air manifold (12), and said ventilation device being **characterized in that** the aperture (16) is:
- delimited by a pair of guiding lips (18) protruding from a wall (17) of the corresponding duct (8) .

2. Ventilation device (2) according to Claim 1, wherein the ducts are substantially rectilinear pipes (8), parallel to one another and aligned so as to form a row of pipes (8).

3. Ventilation device (2) according to either one of the preceding claims, wherein the ducts (8) have a substantially circular or oblong cross section interrupted by the aperture (16).

4. Ventilation device (2) according to any one of the preceding claims, wherein the at least one aperture (16) of a duct (8) is a slit in the duct (8), the at least one slit (16) extending in a direction of extension of the duct (8), preferably over at least 90% of the length of the duct (8).

5. Ventilation device (2) according to any one of the preceding claims, wherein at least one of the ducts (8) comprises reinforcements (20), the reinforcements (20) extending between two adjacent apertures (16), preferably between the guiding lips (18), as appropriate.

6. Ventilation device (2) according to any one of the preceding claims, comprising two air manifolds (12), each air manifold (12) comprising orifices (14), each duct (8) emerging by a first end (15) in an orifice (14) of a first air manifold (12) and by a second end (15) in an orifice (14) of the second air manifold (12), each duct (8) emerging in distinct orifices (14) of the first and second air manifolds (12).

7. Ventilation device (2) according to any one of the preceding claims, comprising at least one turbine engine suitable for generating a flow of air, the or each air manifold (12) being in fluidic communication with the at least one turbine engine or with at least one respective turbine engine, the or each air manifold (12) distributing into the ducts (8) the flow of air generated by the turbine engine or engines.

8. Cooling module (10) for a motor vehicle comprising a heat exchanger (1), with several ducts, called heat-transfer ducts (4), in which a fluid is intended to circulate, and a ventilation device (2) according to any one of the preceding claims, suitable for generating a flow of air (F1) through the heat exchanger, the flow of air generated entering into contact with at least a part of the heat-transfer ducts (4).

9. Cooling module (10) according to Claim 8, wherein the ducts (8) and the number of ducts (8) of the ventilation device (2) are such that a minimum air passage section between the ducts (8) of the ventilation device (2), defined in a plane substantially at right angles to the flow of air (F1) through the heat exchanger (1), lies between 15% and 75% of the surface, preferably between 25 and 50%, defined in a plane at right angles to the flow of air (F1) through the heat exchanger (1), between two end heat-transfer ducts (4).
